(19) Europäisches Patentamt
European Patent Office
Office européen des brevets

(11) **EP 2 869 236 A1**

(12) **EUROPEAN PATENT APPLICATION**

(43) Date of publication:
**06.05.2015 Bulletin 2015/19**

(51) Int Cl.:
***G06K 9/00*** *(2006.01)*    ***G06F 17/30*** *(2006.01)*

(21) Application number: **13306502.9**

(22) Date of filing: **31.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Marilly, Emmanuel**
**91620 Nozay (FR)**
• **Outtagarts, Abdelkader**
**91620 Nozay (FR)**
• **Diot, Fabien**
**91620 Nozay (FR)**
• **Obled, Corinne**
**91620 Nozay (FR)**
• **Squedin, Sylvain**
**91620 Nozay (FR)**

(74) Representative: **Sayettat, Julien Christian**
**STRATO-IP**
**18, rue Soleillet**
**75020 Paris (FR)**

(54) **Process for generating a video tag cloud representing objects appearing in a video content**

(57)    Process for generating a video tag cloud representing objects appearing in a video content, said process providing: a step (B) for extracting video frames of said video content and individually segmenting said video frames into regions; a step (C) for building, for each extracted frame, a topology graph for modelizing the space relationships between the segmented regions of said frame; a step (D) for extracting from the set of built topology graphs frequent patterns according to spatial and temporal constraints, each pattern comprising at least one segmented region; a step (E) for regrouping frequent patterns representing parts of a same object by using trajectories constraints, so as to detect frequent objects of said video content; a step (F) for determining, for each detected frequent object, a weighting factor to apply to said object according at least to spatial and temporal constraints used for extracting the patterns of said object and to trajectories constraints used to regroup said patterns; a step (H) for generating a video tag cloud comprising a visual representation for each of said frequent objects according to their weighting factors.

Fig. 2

EP 2 869 236 A1

**Description**

The invention relates to a process for generating a video tag cloud representing objects appearing in a video content.

Usual text tag clouds are well known from users of Internet, and consist in a group of visual representations of ponderated keywords or metadata. They are also known as "word clouds" or "weighted lists" and are typically used to depict keyword metadata on websites or to visualise free form text. Tags are usually single words the importance of which in highlighted by its font size and/or its color.

In general, such tag clouds are provided by means of tools for analysing text information, said tools taking in input metadata, keywords and text, and processing all, for example through semantic analysis, in order to build significant visual representations (tags) to be displayed on a global tag cloud.

For example, the patent US-8 359 191 provides a process for generating tag clouds wherein tags are represented separated into different linguistic categories and/or clustered according to common domains.

The most part of existing documentation about word tag clouds describe methods that extract words from multimedia contents, such as texts, sounds and/or videos, and then apply dedicated algorithms on said words to evaluate the adequate weighting to apply to say words and to create appropriate tags corresponding to said weightings.

Concerning tag clouds for video and image contents, there exist basic methods consisting in building word tag clouds by basing on text annotations associated with video or image contents. For example, the multimedia file sharing website Flickr® provides such a tag cloud based on keywords associated to photo and/or video contents shared by its users. There are also more elaborated methods consisting in building image tag clouds wherein tags are visual representations of complete ponderated images.

However, image tag clouds as mentioned before are also relying on semantic analysis of text annotations accompanying the images, and not on such an analysis of the images themselves. Moreover, the image tag clouds that not rely on text semantic analysis, as proposed by the free software Wink®, are simple representation models built from no semantic analysis.

The article "Suivi Tridimentionnel en Stéréovision" (S. CONSEIL, S. BOURENNANE, L. MARTIN, GRETSI 2005) reveals that the interesting objects of a video content can be easily detected by a background subtraction approach when said content is captured by a non moving camera. Indeed, in this article, the authors detect a hand in an image by subtracting the background that constitutes a reference image taken in the initiation of the system.

However, the detection solution of this article cannot establish relationships between objects and, when the video content is captured from a moving camera, this background subtraction technique do not provide any useful information about the objects in the captured video content.

For dealing with video contents captured from moving cameras, two different approaches are generally used, the first one consisting in asking a user to tag the objects of interest in the video content and then using motion and appearance models, such as a compressive algorithm or a Tracking Learning Detection (TLD) algorithm. However, although this technique provides very accurate tracking information, it cannot be used in a complete automatized system as it requires prior user inputs.

The second approach uses prior knowledge about the captured video content to simplify the problem. Such an approach generally consists in learning a model of the interesting objects in advance; and said model can be used to detect similar objects in each frame of the captured video content. A quite impressive example of these techniques is presented in the article "Maximum Wright Cliques with Mutex Constraints for Object Segmentation" (T. MA, L.J. LATECKI, CVPR 2012), wherein an application uses a pre trained general object model for a variety of object categories. However, even if these techniques can detect and track multiple objects at the same time without any user input, they still depend on a training step and do not work with any type of object.

The patent US-5 867 584 describes a system enabling automatic tracking of objects through a video sequence, but said system requires the specification of a window including the object, and thus a user interaction and/or a prior knowledge of the object to track.

The patent US-8 351 649 describes also a technology for object tracking that uses a training phase.

To sum up, the above mentioned methods do not give satisfactory, as they generally use algorithms that have prior knowledge, i.e. algorithms that are specifically elaborated through a learning phase and/or a prior interaction, so as to detect, track, extract objects of a video content and establish relationships between said objects in said content. Moreover, some of these methods are not adapted to moving camera constraints, which is also an inconvenient.

The invention aims to improve the prior art by proposing a solution enabling to extract significant objects appearing in a video content, to determine and summarize the relative interactions between said objects and to generate an enhanced multimedia tag cloud comprising representations of said objects, said significant objects being detected automatically, without any prior knowledge of said objects and by taking into account the various conditions of recording of said video content.

For that purpose, and according to a first aspect, the invention relates to a process for generating a video tag cloud representing objects appearing in a video content, said process providing:

- a step for extracting video frames of said video content and individually segmenting said video frames into regions;

- a step for building, for each extracted frame, a topology graph for modelizing the space relationships between the segmented regions of said frame;
- a step for extracting from the set of built topology graphs frequent patterns according to spatial and temporal constraints, each pattern comprising at least one segmented region;
- a step for regrouping frequent patterns representing parts of a same object by using trajectories constraints, so as to detect frequent objects of said video content;
- a step for determining, for each detected frequent object, a weighting factor to apply to said object according at least to spatial and temporal constraints used for extracting the patterns of said object and to trajectories constraints used to regroup said patterns;
- a step for generating a video tag cloud comprising a visual representation for each of said frequent objects according to their weighting factors.

According to a second aspect, the invention relates to a computer program adapted for performing such a process.

According to a third aspect, the invention relates to an application device adapted to perform such a computer program for generating a video tag cloud representing objects appearing in a video content, said application device comprising:

- an engine module for managing said generating;
- an extractor module comprising means for extracting video frames of said video content and means for individually segmenting said video frames into regions;
- a graph module comprising means for building, for each extracted frame, a topology graph for modelizing the space relationships between the segmented regions of said frame;
- a data mining module comprising means for extracting from the set of built topology graphs frequent patterns according to spatial and temporal constraints, each pattern comprising at least one segmented region;
- a clustering module comprising means for regrouping frequent patterns representing parts of a same object by using trajectories constraints, so as to detect frequent objects of said video content;
- a weighting module comprising means for determining, for each detected frequent object, a weighting factor to apply to said object according at least to spatial and temporal constraints used for extracting the patterns of said object and to trajectories constraints used to regroup said patterns;
- a representation module comprising means for generating a video tag cloud comprising a visual representation for each of said frequent objects according to their weighting factors.

Other aspects and advantages of the invention will become apparent in the following description made with reference to the appended figures, wherein:

- figure 1 represents schematically the steps of a process according to the invention;
- figure 2 represents schematically an application device according to the invention interacting with external platforms for generating a video tag cloud.

In relation to those figures, a process for generating a video tag cloud representing objects appearing in a video content, such as an application device 1 comprising means for performing such a process, will be described below.

In particular, the process can be performed by an adapted computer program, the application device 1 could be said computer program or could be a computer readable storage medium comprising said program.

The application device 1 comprises a central engine module 2 for managing such a generating.

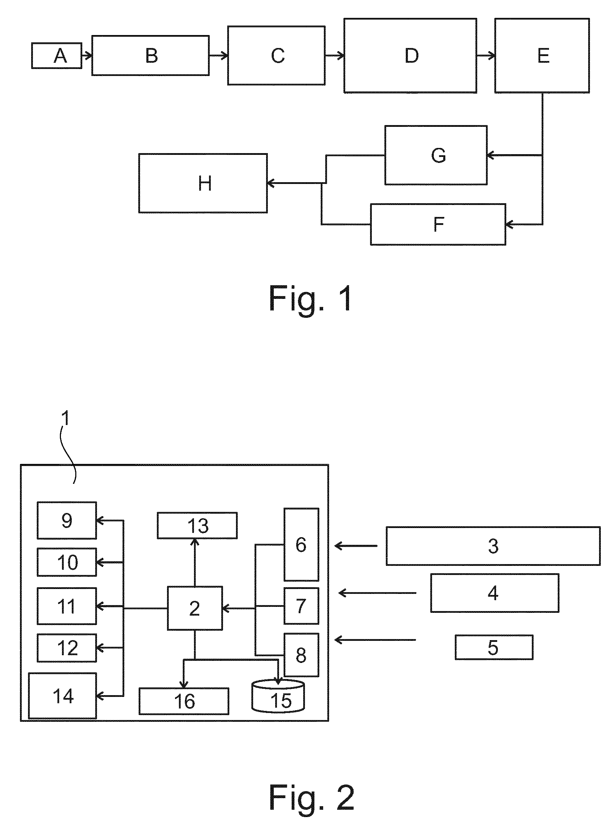

In relation to figures 1 and 2, the process comprises a prior step A wherein a video content is provided by a user and/or an interface to generate a video tag cloud from said video content. The video content can be notably provided from a video platform 3 such as Youtube®, Dailymotion® or the Opentouch Video Store® platform of the Alcatel-Lucent® society, or from a local repository 4, such as a hard drive on a local terminal of a user of said application or a local network to which said user is connected through his terminal.

The video content can also be provided from a web service platform 5 of any other type of application. For example, the application device 1 can be interfaced with IMS products (for Internet Protocol Multimedia Subsystem) for generating image clouds for IMS mobile clouds, heterogeneous cameras and WebRTC (for Web Real Time Communication) clients that are connected via gateways to the core of the IMS network.

For interacting with such interfaces, the application device 1 comprises at least one application programming interface (API) for enabling a user and/or an interface to use said application device for generating a video tag cloud from a video content. In relation to figure 2, the application device 1 comprises a first API 6 for enabling video platforms 3 to use said application and/or its video analysis functionalities, a second API 7 for enabling a user to use directly said application device with video contents that are directly uploaded by said user from local repositories 4, and a third API 8 for enabling other web platforms 5 to interface or use said applications with any other types of applications.

The process further provides a step B for extracting video frames of the provided video content and for individually segmenting said video frames into regions. To do so, the application device 1 comprises an extractor module 9 with which the engine module 2 interacts, said extractor module comprising means for extracting and means for individually segmenting video frames into regions.

In particular, the extractor module 9 can comprise means for implementing a dedicated algorithm for such extraction and segmentation. This algorithm can be notably a slightly modified version of the colour segmentation algorithm developed by Mr. P.F. FELZENSZWALB and Mr. D.P. HUTTENLOCHER, or any other type of known segmentation algorithm.

Once the video frames have been extracted and segmented, the process provides a following step C for building, for each extracted frame, a topology graph for modelizing the space relationships between the segmented regions of said frame. To do so, the application device 1 comprises a graph module 10 comprising means for building such a topology graph for each extracted frame provided by the engine module 2.

In particular, the topology graph can be a Regions Adjacency Graph (RAG) wherein segmented regions are represented by nodes and pairs of adjacent regions are represented by edges, each node being assigned a label representing the colour of the underlying zone of the frame. Such a topology graph is presented in further details in the article "Regions Adjacency Graph Applied to Color Image Segmentation" (A. TREMEAU and P. COLANTONI, IEEE, Transactions on Image Processing, 2000).

The process further provides a step D for extracting from the set of built topology graphs frequent patterns according to spatial and temporal constraints, each pattern comprising at least one segmented region. To do so, the application device 1 comprises a data mining module 11 comprising means for doing such extraction from the set of pattern provided by the graph module 10 upon interaction of the engine module 2 with modules 10, 11. The data mining module 11 can notably be adapted to extract frequent patterns according to the Knowledge Discovery in Databases (KDD) model.

The operation of the data mining module 11 relies on the fact that the most interesting objects of the video content should appear frequently in said video content, i.e. notably in a great number of video frames of said content. In particular, the data mining module 11 comprises means for extracting frequent patterns according to temporal and spatial occurrences of said patterns into the video frames, for example by implementing a plane graph mining algorithm that is arranged for such an extraction. Indeed, taking into account spatial and temporal occurrences of a pattern is more precise than taking into account only the frequency of said pattern, which only concerns the number of graphs containing said pattern without considering the cases wherein said pattern appears more than one time in a same graph.

Moreover, by basing on spatial and temporal occurrences, the data mining module 11 is allowed to discard occurrences of a pattern that are too far apart, spatially and temporally, from any other occurrences of said pattern, considering that spatial and/or temporal far apart occurrences are unlikely to represent the same object than closer occurrences.

In particular, the data mining module 11 comprises means for evaluating temporal occurrences of a pattern according to an average temporal distance between two occurrences of said pattern into the video frames.

In a same way, the data mining module 11 comprises means for evaluating spatial occurrences of a pattern according to an average spatial distance between two occurrences of said pattern in a same video frame. The average spatial distance can notably be computed according to the following formula:

$$\max_{s \in V} d(o_1(s), o_2(s))$$

wherein V is the set of regions of said pattern, $o_1$, $o_2$ are two occurrences of said pattern in the same video frame, and $d(o_1(s), o_2(s))$ is the Euclidian distance between occurrences of a region s of said pattern.

The data mining module 11 can also comprise means for building an occurrence graph from the evaluated spatial and temporal occurrences of patterns, wherein each occurrence of a pattern is represented by a node and nodes of a same pattern are connected by edges if they are close enough in space and time. Thus, a pattern is represented by a chain of connected nodes in such an occurrence graph, said pattern being considered as a frequent pattern and being thus extracted as such if the length of said chain, which corresponds to the number of different frames in which said pattern has at least one occurrence, is higher than a frequency threshold.

The process further provides a step E for regrouping frequent patterns representing parts of a same object by using trajectories constraints, so as to detect frequent objects of the video content. To do so, the application device 1 comprises a clustering module 12 comprising means for regrouping such frequent patterns, so as to obtain a more complete track of said frequent objects.

In particular, the means for regrouping of the clustering module 12 can be adapted to regroup frequent patterns representing parts of a same object according to a dissimilarity measure between trajectories of said patterns in video frames. This dissimilarity measure can notably be computed according to the following formula:

$$\frac{\sum_{t=1}^{n} x_t}{n}$$

wherein $x_t$ is the Euclidian distance between the centroïds of two patterns in a video frame t, the centroid of a pattern corresponding to the barycenter of all the spatial occurrences of said pattern in the video frame t.

In particular, since occurrences of a frequent pattern can be connected together in the occurrence graph provided by the data mining module 11, and thus even if there are several frames between them, said pattern does not necessarily have such an occurrence in each frame said pattern spans. Therefore, the clustering module 12 is adapted to interpolate the missing centroids so that the distance between the centroids of two patterns can be computed in each frame said patterns both span.

Once the dissimilarity measure between each pair of frequent patterns has been computed, the means of regrouping of the clustering module 12 may use a hierarchical agglomerative clustering algorithm to produce a hierarchy between the frequent patterns, and thus may analyse said hierarchy to obtain clusters of frequent patterns representing the more frequent objects, so as to detect said frequent objects, and also to summarize their interactions with other objects of the video content.

The process further provides a step F for determining, for each detected frequent object, a weighting factor to apply to said object according at least to spatial and temporal constraints used for extracting the patterns of said object and to trajectories constraints used for regrouping said patterns. To do so, the application device 1 comprises a weighting module 13 comprising means for determining such a weighting factor upon interaction with the engine module 2 and for each detected frequent object.

In particular, the means of the weighting module 13 are adapted to process the weighting factor from the temporal and spatial occurrences evaluated by the data mining module 11, such as from the dissimilarity measure and the hierarchy analysis provided by the clustering module 12. Generally speaking, the means of the weighting module 13 may determine the weighting factor of an object according to its frequency, its size, its temporal and spatial occurrences, Euclidian distances between its composing patterns and/or their occurrences, the duration of its presence in the video content, its relationship with other objects, especially other frequent objects, in said video content, its colour, or any other contextual inputs.

Moreover, the application device 1 can provide to users means for establishing or changing specific rules for the determination of the weighting factor, for example by means of a dedicated function on the graphical user interface (GUI) of said application device.

The process may also comprise a step G for extracting and segmenting the detected frequent objects. To do so, the application device 1 comprises a segmentation and extraction module 14 comprising means for doing respectively such segmentation and extraction of the detected objects upon interaction with the engine module 2 and from inputs of the data mining 11 and clustering 12 modules.

In particular, the segmentation and extraction module 14 comprises means for identifying objects and their positions and means for extracting said objects, notably with known segmentation algorithms such as a graph cut algorithm, a grabcut algorithm and/or an image/spectral matting algorithm.

Afterwards, the segmented and extracted frequent objects may be stored in a data repository 15 with their corresponding weighting factors. To do so, the application device 1 comprises such a data repository 15 wherein, upon interaction with the engine module 2, the segmented and extracted objects coming from the module 14 are stored with their corresponding weighting factors coming from the weighting module 13.

The process further provides a step H for generating a video tag cloud comprising a visual representation for each frequent object according to their weighting factors. To do so, the application device 1 comprises a representation module 16 comprising means for generating a video tag cloud comprising such visual representations. In particular, the representation module 16 generates the video tag cloud from objects and their corresponding weighting factors stored in the data repository 15 upon interaction with the engine module 2.

In particular, the size, position and movement of the visual representation of an object can be changed depending on its corresponding weighting factor, said factor being determined according to the importance of said object in the video content, said importance being deduced for example by the frequency of said object and/or by relationships between said object and other ones of said content.

For example, starting from a video content wherein an announcer is talking and moving in front of the camera, the application device 1 may generate a video tag cloud wherein the face and the hands of said announcer have been identified as the most important objects of said video content, such as the respective logos of the program and the broadcasting channel, and all are represented with great sized visual representations. On the contrary, the torso and the tie of the announcer may have been identified as important but secondary objects and are represented with smaller visual representations.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for generating a video tag cloud representing objects appearing in a video content, said process providing:

   - a step (B) for extracting video frames of said video content and individually segmenting said video frames into regions;
   - a step (C) for building, for each extracted frame, a topology graph for modelizing the space relationships between the segmented regions of said frame;
   - a step (D) for extracting from the set of built topology graphs frequent patterns according to spatial and temporal constraints, each pattern comprising at least one segmented region;
   - a step (E) for regrouping frequent patterns representing parts of a same object by using trajectories constraints, so as to detect frequent objects of said video content;
   - a step (F) for determining, for each detected frequent object, a weighting factor to apply to said object according at least to spatial and temporal constraints used for extracting the patterns of said object and to trajectories constraints used to regroup said patterns;
   - a step (H) for generating a video tag cloud comprising a visual representation for each of said frequent objects according to their weighting factors.

2. Process according to claim 1, **characterized in that** it provides a step (G) for extracting and segmenting the detected frequent objects that are further stored in a data repository (15) with their corresponding weighting factors, the video tag cloud being generated from said stored objects and said weighting factors.

3. Process according to claim 1 or 2, **characterized in that** the frequent patterns are extracted according to temporal and spatial occurrences of said patterns into the video frames.

4. Process according to claim 3, **characterized in that** the temporal occurrences of a pattern are evaluated according to an average temporal distance between two occurrences of said pattern into the video frames.

5. Process according to claim 3 or 4, **characterized in that** the spatial occurrences of a pattern are evaluated according to an average spatial distance between two occurrences of said pattern in a same video frame, said spatial distance being computed according to the following formula:

$$\max_{s \in V} d(o_1(s), o_2(s))$$

wherein V is the set of regions of said pattern, $o_1$, $o_2$ are two occurrences of said pattern in the same video frame, and $d(o_1(s), o_2(s))$ is the Euclidian distance between occurrences of a region s of said pattern.

6. Process according to any of claims 3 to 5, **characterized in that** the frequent patterns representing parts of a same object are regrouped according to a dissimilarity measure between trajectories of said patterns in video frames, said dissimilarity measure being computed according to the following formula:

$$\frac{\sum_{t=1}^{n} x_t}{n}$$

wherein $x_t$ is the Euclidian distance between the centroïds of two patterns in a video frame t, the centroid of a pattern corresponding to the barycenter of all the spatial occurrences of said pattern in the video frame t.

7. Computer program adapted to perform a process according to any of claims 1 to 6 for generating a video tag cloud representing objects appearing in a video content.

8. Application (1) device adapted to perform a computer program according to claim 7 for generating a video tag cloud representing objects appearing in a video content, said application device comprising:

   - an engine module (2) for managing said generating;
   - an extractor module (9) comprising means for extracting video frames of said video content and means for individually segmenting said video frames into regions;
   - a graph module (10) comprising means for building, for each extracted frame, a topology graph for modelizing the space relationships between the segmented regions of said frame;
   - a data mining module (11) comprising means for extracting from the set of built topology graphs frequent patterns according to spatial and temporal constraints, each pattern comprising at least one segmented region;
   - a clustering module (12) comprising means for regrouping frequent patterns representing parts of a same object by using trajectories constraints, so as to detect frequent objects of said video content;

- a weighting module (13) comprising means for determining, for each detected frequent object, a weighting factor to apply to said object according at least to spatial and temporal constraints used for extracting the patterns of said object and to trajectories constraints used to regroup said patterns;

- a representation module (16) comprising means for generating a video tag cloud comprising a visual representation for each of said frequent objects according to their weighting factors.

9. Application device (1) according to claim 8, **characterized in that** it comprises a segmentation and extraction module (14) comprising means for respectively extracting and segmenting detected frequent objects, said application further comprising a data repository (15) for storing said segmented objects with their corresponding weighting factors, the representation module (16) generating the video tag cloud from said stored objects and said weighting factors.

10. Application device (1) according to claim 8 or 9, **characterized in that** the means for extracting of the data mining module (11) are adapted to extract frequent patterns according to temporal and spatial occurrences of said patterns into the video frames.

11. Application device (1) according to claim 10, **characterized in that** the data mining module (11) comprises means for evaluating temporal occurrences of a pattern according to an average temporal distance between two occurrences of said pattern into the video frames.

12. Application device (1) according to claim 10 or 11, **characterized in that** the data mining module (11) comprises means for evaluating spatial occurrences of a pattern according to an average spatial distance between two occurrences of said pattern in a same video frame, said spatial distance being computed according to the following formula:

$$\max_{s \in V} d(o_1(s), o_2(s))$$

wherein V is the set of regions of said pattern, $o_1$, $o_2$ are two occurrences of said pattern in the same video frame, and $d(o_1(s), o_2(s))$ is the Euclidian distance between occurrences of a region s of said pattern.

13. Application device (1) according to any of claims 10 to 12, **characterized in that** the means for regrouping of the clustering module (12) are adapted to regroup frequent patterns representing parts of a same object according to a dissimilarity measure between trajectories of said patterns in video frames, said dissimilarity measure being computed according to the following formula:

$$\frac{\sum_{t=1}^{n} x_t}{n}$$

wherein $x_t$ is the Euclidian distance between the centroïds of two patterns in a video frame t, the centroid of a pattern corresponding to the barycenter of all the spatial occurrences of said pattern in the video frame t.

14. Application device (1) according to any of claims 8 to 13, **characterized in that** it comprises at least one application programming interface (API) (6, 7, 8) for enabling a user and/or an interface (3, 4, 5) to use said application device for generating a video tag cloud from a video content.

Fig. 1

Fig. 2

**EP 2 869 236 A1**

Europäisches
Patentamt

European
Patent Office

Office européen
des brevets

# EUROPEAN SEARCH REPORT

Application Number

EP 13 30 6502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ANJULAN A ET AL: "A Unified Framework for Object Retrieval and Mining", IEEE TRANSACTIONS ON CIRCUITS AND SYSTEMS FOR VIDEO TECHNOLOGY, IEEE SERVICE CENTER, PISCATAWAY, NJ, US, vol. 19, no. 1, 1 January 2009 (2009-01-01), pages 63-76, XP011280414, ISSN: 1051-8215, DOI: 10.1109/TCSVT.2008.2005801 * the whole document * | 1-14 | INV. G06K9/00 G06F17/30 |
| Y | US 2007/162873 A1 (HARO ANTONIO [US] ET AL) 12 July 2007 (2007-07-12) * paragraph [0026] - paragraph [0036] * | 1-14 | |
| A | US 2010/125581 A1 (PELEG SHMUEL [IL] ET AL) 20 May 2010 (2010-05-20) * abstract * | 1-14 | |
| A | FABIEN DIOT ET AL: "Graph Mining for Object Tracking in Videos", 24 September 2012 (2012-09-24), MACHINE LEARNING AND KNOWLEDGE DISCOVERY IN DATABASES, SPRINGER BERLIN HEIDELBERG, BERLIN, HEIDELBERG, PAGE(S) 394 - 409, XP047016931, ISBN: 978-3-642-33459-7 * the whole document * | 1-14 | **TECHNICAL FIELDS SEARCHED (IPC)** G06K G06F |

The present search report has been drawn up for all claims

| Place of search | Date of completion of the search | Examiner |
|---|---|---|
| The Hague | 23 May 2014 | Sonius, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

## ANNEX TO THE EUROPEAN SEARCH REPORT
## ON EUROPEAN PATENT APPLICATION NO.

EP 13 30 6502

This annex lists the patent family members relating to the patent documents cited in  the above-mentioned European search report.
The members are as contained in the European Patent Office EDP file on
The European Patent Office is in no way liable for these particulars which are merely given for the purpose of information.

23-05-2014

| Patent document cited in search report | Publication date | Patent family member(s) | Publication date |
|---|---|---|---|
| US 2007162873 A1 | 12-07-2007 | US 2007162873 A1<br>WO 2007080465 A1 | 12-07-2007<br>19-07-2007 |
| US 2010125581 A1 | 20-05-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8359191 B
- US 5867584 A

- US 8351649 B

**Non-patent literature cited in the description**

- **S. CONSEIL ; S. BOURENNANE ; L. MARTIN.** Suivi Tridimentionnel en Stéréovision. *GRETSI,* 2005
- **T. MA ; L.J. LATECKI.** Maximum Wright Cliques with Mutex Constraints for Object Segmentation. *CVPR,* 2012

- **A. TREMEAU ; P. COLANTONI.** Regions Adjacency Graph Applied to Color Image Segmentation. *IEEE, Transactions on Image Processing,* 2000